# EUROPEAN PATENT SPECIFICATION

(11) **EP 1 244 586 B1**
(45) Date of publication and mention of the grant of the patent: **15.02.2006**
(21) Application number: 00989124.3
(22) Date of filing: 21.12.2000
(51) Int. Cl.: B62J 6/12, H02K 21/38

(54) **GENERATOR**
GENERATOR
GENERATEUR

(30) Priority: 28.12.1999 SE 9904807
(43) Date of publication of application: 02.10.2002
(73) Proprietor: Sjöberg, Tarmo, 512 76 Hillared (SE)
(72) Inventor: Sjöberg, Tarmo, 512 76 Hillared (SE)
(74) Representative: Lundquist, Arne
(86) International application number: PCT/SE2000/002620
(87) International publication number: WO 2001/047765

(56) References cited:
- EP-A1- 0 425 260
- DE-A1- 3 236 211
- US-A- 5 731 645

## Description

The present invention relates to a generator, built in a wheel nave, as defined in the preamble of claim 1. Such a generator is shown in EP-A-0 425 260.
There are generators for a variety of purposes. There are for instance small local wind power plants, for separate households or a small group of households, another application is for bicycles. Present generators for such seldom operate satisfactorily, as they are mounted for contact with a tyre when light shall be switched on. Often, especially with rain or snow, the friction between the tyre and the driving wheel of the generator is inadequate such that the generator does not operate in the intended way. When a conventional generator for a bicycle operates it exerts a considerable brake action at the wheel, which may be annoying.
The object of the present invention is to provide a generator of the art mentioned introductorily, that does not show the drawbacks, that are typical for generators, hitherto present, that is to say with a great braking action in relationship to effect gained, or else inferior function.
According to the invention, such a generator is characterised primarily in the fact, that
magnets are provided, concentric with the coil, turning a first group with alternating N- and S- magnet poles to a first plane, and a second group with alternating N- and S- magnet poles turning to an opposite second plane, whereas a first and a second pole changer are provided to rotate in relationship to the wheel axis, whereas during the rotation one of the pole changers passes relatively close to the first group of magnet poles and the second pole changer passes relatively close to the second group of magnet poles. Further characteristics and features for the generator according to the invention are disclosed in the enclosed dependent claims.

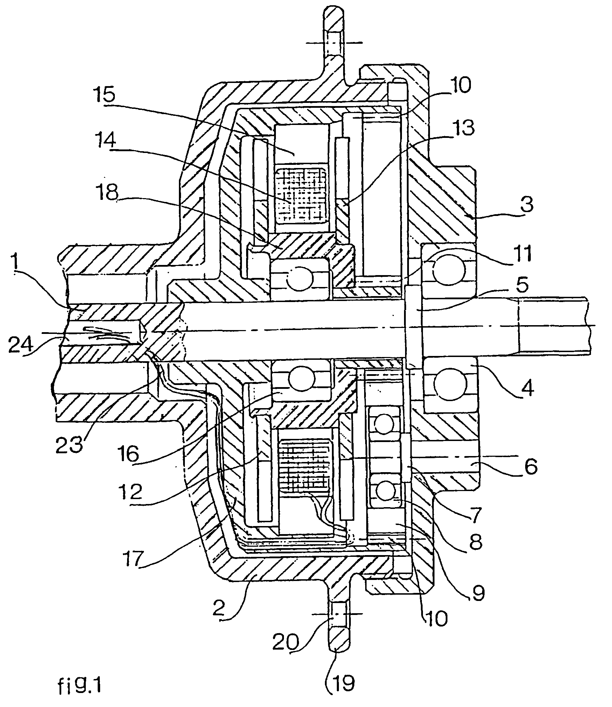

The invention will be described in the following, reference being made to a generator for a bicycle as an example, reference being made to the enclosed schematic figures.
Thus there is shown in
figure 1 a generator for a bicycle according to the invention in an axial section,

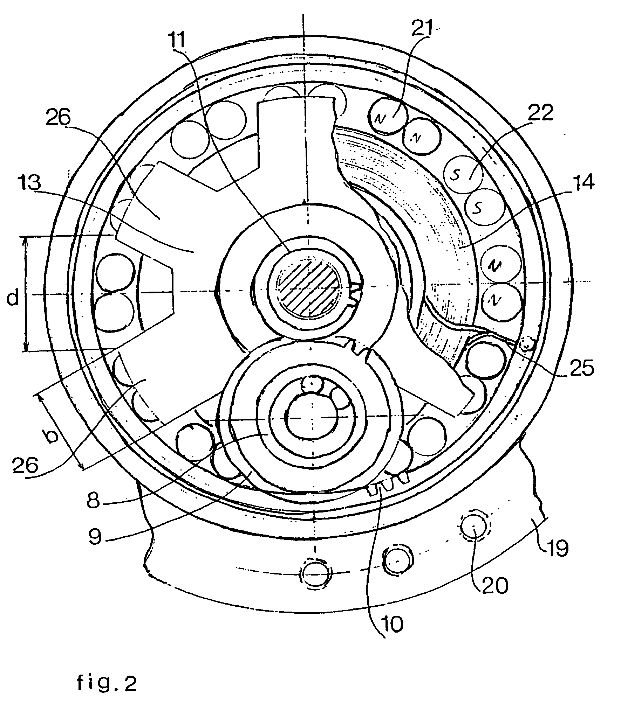

figure 2 a view toward a section perpendicular to figure 1, whilst
figure 3 shows an alternative embodiment of a pole changer in an axial section.
The bicycle generator forms part of the wheel nave at an axis 1. The generator is protected by and is enclosed in a casing 2, that is ended by an end plate 3, which is carried by the axis by a ball- bearing 4, engaging a flange 5 at the axis 1. The encapsulation is part of the wheel nave and the casing 2 has an outer flange 19 with holes for the wheel spokes in a conventional wheel design. The other end of the casing is carried via the wheel nave of a corresponding bearing at the axis.

The generator also comprises a portion 17, fixed to the axis, forming a magnet casing. In this there are provided a number of magnets 15, 21,22, placed in a circle within the casing 17, and within these a coil 14. The fixed portion also comprises a gear ring 10 with inner cogs, cooperating with a gear wheel 9 to transfer a quick rotating movement to pole changers 12,13, provided at the sides of the magnets and the coil.

An axis 6 is fixed at the end plate 3 of the nave, direct inwards to the generator. The gear wheel 9 is arranged to rotate freely on the axis 6 on a ball - bearing 8 at the flange 7 of the axis. The gear wheel 9 is engaging the gear ring 10 and also a gear ring 11 that is fixed, via a bearing ring 18, to pole changers 12,13. The bearing ring is arranged to rotate by a ball - bearing on the wheel axis 1.

A number of magnets 15,21,22 are directed parallel to the axis 1, the magnets being provided outside of the coil 14 concentric with and evenly distributed in a ring around the complete circumference of the coil, such that the magnet poles, turned outwards to the pole changers are alternating North- respectively South-poles with the same partition between different arts of poles around the complete ring. The pole changers 12,13 are plane discs and have each of them a number of protruding flanges 26, extending from a central disc of the pole changer in the same plane as the disc outwards to and somewhat above the middle of the magnet poles. Preferably the number of flanges is the same as the number of magnet pole groups of one art of pole and the width b of each flange corresponds approximately to the partition measure d between the magnet poles. The magnet poles are coupled together, magnetically conductive, by the bearing ring 18.

The function of the device may be described as follows. When the wheel rotates around the axis 1 the nave is turned and therewith the casing 2 and the end plate 3 around the axis 1 with the same number of revolutions as that of the wheel, whilst the magnet casing 17, at the inside of the casing 2, is fixed to the axis 1 and remains still in relationship to same. The axis 6 of the gear wheel 9 will then be transferred in relationship to the magnet casing 17 and the gear ring 10, which is part of same, which means, that the gear wheel 9 rotates on the axis 6. The gear wheel 9 will then act upon the gear ring 11 such that this will rotate on the axis 1 and via the bearing ring 18 this rotation will be transferred to the pole changers 12,13, which will then rotate in relationship to the magnets 15,21,22, which stand still in relationship to the axis 1. The gear ratio between the gear ring 10 and the gear wheel 9 and that between the gear wheel 9 and the gear ring 11 will make the pole changers rotate at a much higher speed of rotation than that of the wheel and the wheel nave. Variations in the magnet field, that occur in relationship to the coil 14 will mean, that an electric current is created in the coil and is conducted via the electrical lines 23 and 25 to an electrical circuit, that usually is formed from components, being part of the of the bicycle lightning. In this case, the magnet casing and the wheel axis are used as one conductor, whilst the other conductor 23 is led out through a channel 24 in the axis.

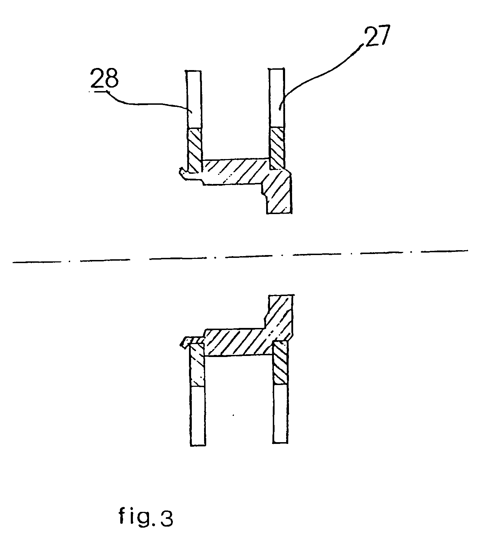

The design disclosed above is such, that the generator only demands a small space, and it is for instance possible to combine it with a brake drum in the same nave. Within the scope of the invention as defined in the appended claims, the design of the generator may be varied in different ways. This is, for example, true for the number of magnets and the location of these inwards our outwards of the coil, with different partitions. The design of the pole changers may also be varied in several ways. In figure 3 it is shown, that the pole changers 26 and 26 are formed as truncated cones with a small axial extension, with recesses, such that flanges are formed.

## Claims

1. Generator, built in a wheel nave, whereas this and a casing (2), enclosing the generator, rotate around a fixed wheel axis (1), whereas the generator comprises a coil (14), concentric with the wheel axis and fixed to wheel axis (1),
**characterised in that**
magnets are provided, concentric with the coil (14) turning a first group with alternating N- and S- magnet poles (21,22) to a first plane, and a second group with alternating N- and S- magnet poles to an opposite second plane, wherein a first and a second pole changer (12,13) are provided to rotate in relationship to the wheel axis (1), and wherein during the rotation one of the pole changers (12) passes relatively close to the first group of magnet poles and the other pole changer (13) passes relatively close to the second group of magnet poles.

2. Generator according to claim 1,
**characterised in that**
the pole changers (12,13) consist of plane discs with flanges (26), protruding in the same plane.

3. Generator according to claim 1,
**characterised in that**
the pole changers (27,28) consist of truncated cones with small axial extension, with recesses, such that flanges are formed.

4. Generator according to claim 2 or 3,
**characterised in that**
the number of flanges (26) at a pole changer (12,13) is the same as the number of like magnet poles directed to the pole changer.

5. Generator according to any of claims 1 to 4,
**characterised in that**
the pole changers are arranged to rotate at a higher rotation a 1 speed than the wheel nave.

6. Generator according to claim 2 or 3,
**characterised in that**
the pole changers are driven by a driving device, comprising a gear ring, provided at the inside of a casing (17) fixed to the wheel axis (1), further a gear wheel (9) engaging the gear ring, freely rotating around an axis (6) firmly mounted at said casing (2) or at and end plate (3), comprised in same, and a gear (11) directly or indirectly firmly connected to the pole changers and that is also engaging the gear wheel (9).

## Patentansprüche

1. Generator, eingebaut in einen Radkörper, der, ebenso wie ein Gehäuse (2), das den Generator umschtießt, um eine feste Radachse (1) drehbar ist, wobei der Generator eine Spule (14) aufweist, die konzentrisch zu der Radachse liegt und an der Radachse (1) befestigt ist,
**dadurch gekennzeichnet, dass** Magnete konzentrisch zu der Spule (14) vorgesehen sind, die eine erste Gruppe mit abwechselnden Nord- und Süd-Magnetpolen (21, 22) zu einer ersten Ebene und eine zweite Gruppe mit abwechselnden Nord- und Süd-Magnetpolen zu einer gegenüberliegenden zweiten Ebene dreht, wobei ein erster und ein zweiter Polwender (12, 13) vorgesehen ist, die in Relation zu der Radachse (1) drehbar sind, und wobei während der Drehung einer der Polwender (12) relativ nahe an der ersten Gruppe von Magnetpolen und der andere Polwender (13) relativ nahe an der zweiten Gruppe von Magnetpolen vorbeiläuft.

2. Generator nach Anspruch 1,
**dadurch gekennzeichnet, dass** die Polwender (12, 13) aus ebenen Scheiben mit Flanschen (26) bestehen, die in der gleichen Ebene hervortreten.

3. Generator nach Anspruch 1,
**dadurch gekennzeichnet, dass** die Polwender (27, 28) aus Kegelstümpfen mit geringer axialer Ausdehnung mit Ausnchmungen bestehen, so dass Flansche gebildet werden.

4. Generator nach Anspruch 2 oder 3,
**dadurch gekennzeichnet, dass** die Anzahl der Flansche (26) an einem Polwender (12,13) die gleiche ist, wie die Anzahl von gleichen Magnetpolen, die auf den Polwender gerichtet sind.

5. Generator nach einem der Ansprüche 1 bis 4,
**dadurch gekennzeichnet, dass** die Polwender so angeordnet sind, dass sie mit einer höheren Drchgeschwindigkeit rotieren, als der Radkörper.

6. Generator nach Anspruch 2 oder 3,
**dadurch gekennzeichnet, dass** die Polwender mit einer Antriebseinrichtung antreibbar sind, die einen Getriehering (10), der an der Innenseite eines Gehäuses (17) angeordnet und an der Radachse (I) befestigt ist, ferner ein Getrieberad (9), das mit dem Getriebering (10) eingreift und frei um eine Achse (6) rotiert, die fest an dem Gehäuse (2) oder an einer Endplatte (3), die in diesem enthalten ist, montiert ist, sowie einen Getriebering (11) aufweist, der direkt oder indirekt fest mit den Polwendem verbunden ist und der ebenfalls mit dem Getrieberad (9) eingreift.

## Revendications

1. Générateur, construit dans un moyeu de roue, alors que celui-ci et un carter (2), enfermant le générateur, tournent autour d'un axe de roue fixé (1), alors que le générateur comporte une bobine (14), concentrique à l'axe de roue et fixée sur l'axe de roue (1),
**caractérisé en ce que**
des aimants sont agencés, concentriquement à la bobine (14) qui tourne, un premier groupe ayant des pôles magnétiques N et S alternants (21, 22) dans un premier plan, et un second groupe ayant des pôles magnétiques N et S alternants dans un second plan opposé, dans lequel un premier et un second changeur de pôle (12, 13) sont agencés pour tourner par rapport à l'axe de roue (1), et dans lequel pendant la rotation un des changeurs de pôle (12) passe relativement près du premier groupe de pôles magnétiques et l'autre changeur de pôle (13) passe relativement près du second groupe de pôles magnétiques.

2. Générateur selon la revendication 1,
**caractérisé en ce que**
les changeurs de pôle (12, 13) sont constitués de disques plats ayant des flancs (26) en saillie dans le même plan.

3. Générateur selon la revendication 1,
**caractérisé en ce que**
les changeurs de pôle (27, 28) sont constitués de cônes tronqués ayant une petite étendue axiale, ayant des évidements, de telle sorte que les flancs sont formés.

4. Générateur selon la revendication 2 ou 3,
**caractérisé en ce que**
le nombre de flancs (26) au niveau d'un changeur de pôle (12, 13) est le même que le nombre de pôles magnétiques analogues dirigés vers le changeur de pôle.

5. Générateur selon l'une quelconque des revendications 1 à 4,
**caractérisé en ce que**
les changeurs de pôle sont agencés pour tourner à une vitesse de rotation plus élevée que le moyeu de roue.

6. Générateur selon la revendication 2 ou 3,
**caractérisé en ce que**
les changeurs de pôle sont entraînés par un dispositif d'entraînement, comportant une couronne dentée, agencée à l'intérieur d'un carter (17) fixé sur l'axe de roue (1), en outre un pignon (9) venant en prise avec la couronne dentée, tournant librement autour d'un axe (6) monté de manière ferme au niveau dudit carter (2) ou au niveau d'une plaque d'extrémité (3), constituée dans celui-ci, et un engrenage (11) relié fermement directement ou indirectement aux changeurs de pôle et qui est également en prise avec le pignon (9).
